# EUROPÄISCHE PATENTSCHRIFT

(11) **EP 1 249 359 B1**
(45) Veröffentlichungstag und Bekanntmachung des Hinweises auf die Patenterteilung: **10.05.2006**
(21) Anmeldenummer: 02005209.8
(22) Anmeldetag: 07.03.2002
(51) Int. Cl.: B60H 1/34

(54) **Luftströmungsbeeinflussungseinrichtung, insbesondere zur Verwendung in der Instrumententafel von Fahrzeugen**
Device for controlling an air flow, in particular for use in a vehicle dashboard
Appareil pour contrôler un flux d'air, en particulier pour utilisation dans un tableau de bord d'un véhicule

(30) Priorität: 12.04.2001 DE 10118435
(43) Veröffentlichungstag der Anmeldung: 16.10.2002
(73) Patentinhaber: Volkswagen Aktiengesellschaft, 38436 Wolfsburg (DE)
(72) Erfinder: Lichner, Dietmar, 38165 Wendhausen (DE); Finke, Oliver, 38464 Gr. Twülpstedt (DE); Jachmann, Christian, 38154 Königslutter (DE)

(56) Entgegenhaltungen:
- EP-A- 0 962 721
- DE-A- 19 615 223
- JP-A- 60 243 441
- US-A- 5 584 098

## Beschreibung

Die Erfindung bezieht sich auf eine Luftströmungsbeeinflussungseinrichtung, insbesondere zur Verwendung in der Instrumententafel von Fahrzeugen, mit einem Luftausströmer mit Funktionselementen, wobei der Luftausströmer wenigstens einen Schwenkeinsatz mit wenigstens einem Verschlußelement umfaßt, sowie im wesentlichen in horizontaler Richtung verstellbare Luftleitelemente und/oder im wesentlichen in vertikaler Richtung verstellbare Luftleitelemente, und mit einer Luftzuführeinrichtung in Wirkverbindung steht, wobei der Luftausströmer Betätigungselemente für den Schwenkeinsatz und Betätigungselemente für die Luftleitelemente aufweist.

Aus dem Stand der Technik sind verschiedene Ausführungsformen derartiger Luftströmungsbeeinflussungseinrichtungen bekannt. So ist z.B. aus der DE 196 15 223 A1 eine Luftströmungsbeeinflussungseinrichtung nach dem Oberbegriff des Anspruchs 1 bekannt, die u.a. bekannt, die u.a. horizontale und vertikale Luftleitelemente aufweist, sowie ein als Verschlußteil bezeichnetes Schwenkelement, das mit einem als Verschlußelement wirkenden Plattenkörper versehen ist. Dieser Plattenkörper trägt dabei gleichzeitig die Luftleitelemente. Bei dieser Anordnung kann zur vollständigen Unterbindung der Luftausströmung der Plattenkörper über eine Griffleiste in eine Schließstellung überführt werden, weiterhin sind die horizontal und vertikal ausgerichteten Luftleitschaufeln über einen vorderseitigen Bedienknopf gemeinsam verstellbar.

Eine ähnliche Anordnung ist aus der EP 0 879 718 A2 bekannt. In diesem Falle ist das Luftaustrittselement mit einem ersten mit Durchlässen versehenen Teilbereich für einen diffusen Luftaustritt und mit einem zweiten mit Durchlässen versehenen Teilbereich für einen großflächig freien Luftaustritt versehen, wobei durch Verdrehen wahlweise der erste oder der zweite Teilbereich wirksam in einen Luftstrom bringbar ist.

Aus dem Stand der Technik ist weiterhin bekannt, siehe die DE 197 48 998 A1, einen Schwenkeinsatz, der eine mit der Luftausströmöffnung im wesentlichen kongruende Mantelöffnung aufweist und die Luftleitlamellen trägt, mit einer als Schließrollo ausgebildeten Blende zu koppeln. Dabei deckt der Schwenkeinsatz mit zunehmenden Ausschwenken seiner Mantelöffnung aus der Luftausströmöffnung letztere in gleichem Maße mit dem Schließrollo ab. Die Luftausströmöffnung des Gehäuses ist auf diese Weise mit einem Schließrollo vollständig abdeckbar, wobei das Schließrollo so geführt ist, daß bei völlig verschlossener Luftausströmöffnung der Luftausströmer mit dem Armaturenbrett eine geschlossenflächige Ansicht bietet. Zur Kopplung von Schließrollo und Schwenkeinsatz trägt der Schwenkeinsatz einen Mitnehmer, der in ein aus dem Rollokasten vorstehendes Mitnahmeelement eingreift.

All diese bekannten Anordnungen haben an sich den Vorteil, daß durch ein mit einem Schwenkeinsatz zusammenwirkendes Verschlußelement ein vollständiges Verschließen des Luftausströmers ermöglicht wird, so daß der Luftausströmer an das diesen umgebende Dekor anpaßbar ist, nachteilig ist jedoch in allen Fällen, daß der Schwenkbereich des Luftausströmers zu klein ist, um einen ausreichend großen Luftquerschnitt zu gewährleisten, weiterhin liegen bei den bekannten Ausführungsformen Betätigungselemente im Luftstrom und führen zu nicht akzeptablen Verwirbelungen.

Der Erfindung liegt die Aufgabe zugrunde, die bekannten Luftströmungsbeeinflussungseinrichtungen unter Beibehaltung der bisherigen Vorteile in der Weise zu verbessern, daß bei Beibehaltung einer vollen Dekorfähigkeit der Schwenkbereich des Luftausströmers deutlich vergrößert wird und daß weiterhin die Funktionseigenschaften des Luftausströmers verbessert werden. Die gewünschte Anordnung soll dabei einfach und wirtschaftlich herstellbar und gut in der Handhabung sein.

Die Aufgabe wird erfindungsgemäß dadurch gelöst, daß das Betätigungselement für den Schwenkeinsatz über Mittel zur gekoppelten linearen und kreisbogenförmigen Bewegung des Betätigungselementes für den Schwenkeinsatz entsprechend dem kennzeichnenden Teil des Anspruchs 1 geführt ist. Auf diese Weise wird erstmalig mit einfachen Mitteln die Möglichkeit geschaffen, bei solchen Luftausströmern mit Schwenkeinsatz und damit zusammenwirkendem Verschlußelement bei Beibehaltung einer vollen Dekorfähigkeit den Schwenkbereich des Luftausströmers deutlich zu vergrößern und weiterhin durch eine Luftquerschnittsverbesserung eine Verbesserung der Funktionseigenschaften zu erzielen. Die erfindungsgemäße Anordnung ist dabei einfach und wirtschaftlich herstellbar und gut in der Handhabung. Die erfindungsgemäße Anordnung ist insbesondere in den Fällen vorteilhaft, in denen ein hoher Anspruch an die Dekorfähigkeit gestellt wird und trotzdem gute Funktionseigenschaften erwartet werden.

Erfindungsgemäß sind die Mittel zur Führung des Betätigungselementes für den Schwenkeinsatz als Kulissenführung ausgebildet. Dies ist eine in konstruktiver Hinsicht einfache Möglichkeit zur Verwirklichung der erfindungsgemäßen Anordnung.

Es sind dabei zweckmäßig die Mittel zur Führung des Betätigungselementes für den Schwenkeinsatz, insbesondere die Kulissenführung derart ausgebildet, daß das Betätigungselement für den Schwenkeinsatz beim Verschwenken des Schwenkeinsatzes in die geöffnete Position nach vorne verschoben wird, derart, daß das Betätigungselement nach vorne übersteht. Dadurch kann insbesondere in geöffnetem Zustand des Luftausströmers das Betätigungselement für den Schwenkeinsatz besser gegriffen werden.

Bei einer vorteilhaften Ausführungsform sind dabei die Mittel zur Führung des Betätigungselementes für den Schwenkeinsatz derart ausgebildet, daß das Betätigungselement für den Schwenkeinsatz beim Verschwenken des Schwenkeinsatzes in die geöffnete Position derart nach vorne verschoben wird, daß das Betätigungselement über den Rand der Instrumententafel übersteht. Das Betätigungselement kann dann besonders einfach gehandhabt werden.

Nach einem weiteren Merkmal der vorliegenden Erfindung erstreckt sich das Betätigungselement für den Schwenkeinsatz über einen Teilbereich des Luftausströmers. Diese Ausführung ist besonders einfach und kostengünstig herstellbar.

Bei einer alternativen Ausführungsform der vorliegenden Erfindung erstreckt sich das Betätigungselement für den Schwenkeinsatz durchgehend über im wesentlichen die gesamte Breite des Luftausströmers. Diese Ausführung ist besonders vorteilhaft in der Handhabung.

Nach einem anderen Merkmal der vorliegenden Erfindung ist das Betätigungselement für den Schwenkeinsatz an dem Verschlußelement des Schwenkeinsatzes angeordnet. Dies vereinfacht die Herstellung zusätzlich.

Nach einem letzten Merkmal der vorliegenden Erfindung umfaßt der Luftausströmer wenigstens eine mit einer Luftzuführeinrichtung in Wirkverbindung stehende Verschlußklappe, wodurch eine Verringerung der Geräusche erzielt wird.

Die Erfindung ist in den Figuren der Zeichnung in mehreren Ausführungsbeispielen dargestellt. Es zeigen:
- Fig. 1: eine schematische, weggebrochene Seitenansicht einer ersten Ausführungsform der erfindungsgemäßen Luftströmungsbeeinflussungseinrichtung bei geschlossenem Luftausströmer,
- Fig. 2: die schematische, weggebrochene Seitenansicht der Ausführungsform nach Fig. 1 bei geöffnetem Luftausströmer;
- Fig. 3: eine schematische, perspektivische Draufsicht einer dritten Ausführungsform der erfindungsgemäßen Luftströmungsbeeinflussungseinrichtung,
- Fig. 4: eine schematische, perspektivische Draufsicht einer vierten Ausführungsform der erfindungsgemäßen Luftströmungsbeeinflussungseinrichtung.

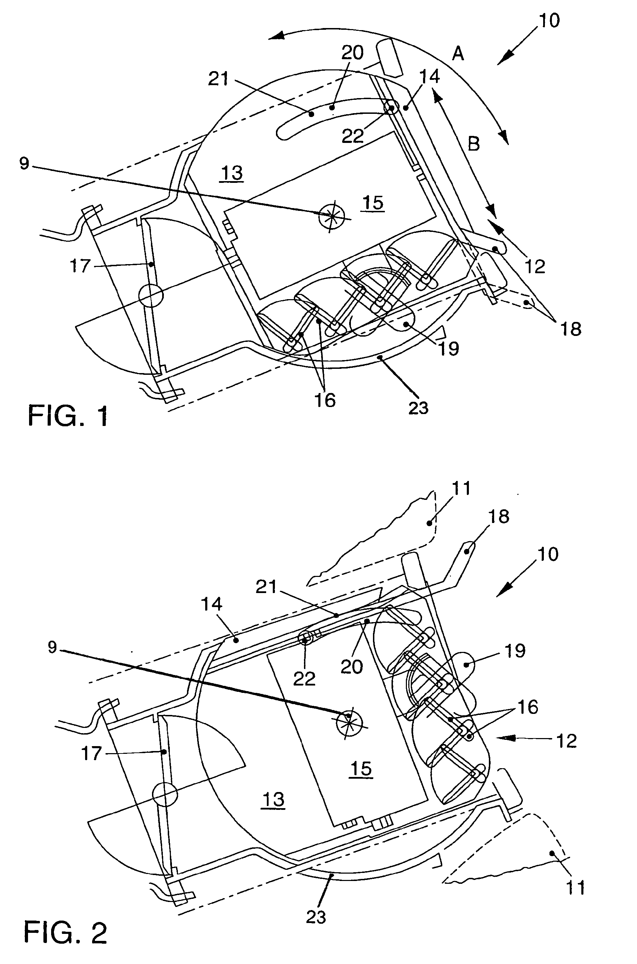

Die erfindungsgemäße Luftströmungsbeeinflussungseinrichtung ist generell mit 10 bezeichnet und dient insbesondere zur Verwendung in einer mit 11 bezeichneten Instrumententafel von Kraftfahrzeugen. Die Luftströmungsbeeinflussungseinrichtung 10 umfaßt, siehe insb. die Fig. 1 und 2 der Zeichnung, einen Luftausströmer 12 mit Funktionselementen, wobei der Luftausströmer 12 im dargestellten Ausführungsbeispiel einen Schwenkeinsatz 13 mit einem Verschlußelement 14 umfaßt, sowie im wesentlichen in horizontaler Richtung verstellbare Luftleitelemente 15 und im wesentlichen in vertikaler Richtung verstellbare Luftleitelemente 16. Der Luftausströmer 12 umfaßt weiterhin eine mit einer Luftzuführeinrichtung in Wirkverbindung stehende Verschlußklappe 17, die drehbar um eine nicht näher bezeichnete Achse gelagert ist. Der Luftausströmer 12 weist außerdem Betätigungselemente 18 für den Schwenkeinsatz 13 und Betätigungselemente 19 für die Luftleitelemente 15, 16 auf. Die Luftleitelemente 16 sind jeweils versetzt zueinander angeordnet und gelenkig miteinander verbunden.

Die Betätigungselemente 18 für den Schwenkeinsatz 13 des Luftausströmers 12 der erfindungsgemäßen Luftströmungsbeeinflussungseinrichtung 10 sind erfindungsgemäß über Mittel 20 zur gekoppelten linearen und kreisbogenförmigen Bewegung des Betätigungselementes 18 für den Schwenkeinsatz 13 geführt. Dabei sind die Mittel 20 zur Führung des Betätigungselementes 18 für den Schwenkeinsatz 13 in den dargestellten Ausführungsformen als Kulissenführung 21 ausgebildet Es ist dabei in der Fig. 1 der Zeichnung der Luftausströmer 12 in geschlossenem Zustand und in Fig. 2 in geöffnetem Zustand dargestellt, die Schwenkbewegung des Schwenkeinsatzes 13 ist in Fig.1 mit Doppelpfeil A und die lineare Bewegungsrichtung des Betätigungselementes 18 mit Doppelpfeil B angegeben. Das kinematische Betätigungselement 18 ist in Fig. 1 in der hinteren Lage in durchgezogener und in der vorderen Lage in gestrichelter Linie dargestellt.

Das Betätigungselement 18 wird nun beim Verschwenken des Luftausströmers 12 in den geöffneten Zustand gleichzeitig nach vorne verschoben, derart, daß es übersteht, so daß insbesondere in geöffnetem Zustand des Luftausströmers 12 das Betätigungselement 18 für den Schwenkeinsatz 13 besser gegriffen werden kann. Die Bewegung des Betätigungselementes 18 in der feststehend am Gehäuse 23 der Luftströmungsbeeinflussungseinrichtung 10 angeordneten Kulissenführung 21 ist dabei durch einen mit 22 bezeichneten Stift an dem Betätigungselement 18 geführt. Es sind dabei zweckmäßigerweise die Mittel 20 zur Führung des Betätigungselementes 18 für den Schwenkeinsatz 13, insbesondere die Kulissenführung 21 derart ausgebildet, daß das Betätigungselement 18 für den Schwenkeinsatz 13 beim Verschwenken des Schwenkeinsatzes 13 in die geöffnete Position nach vorne verschoben wird, derart, daß das Betätigungselement 18 nach vorne übersteht. Besonders vorteilhaft sind dabei die Mittel 20 zur Führung des Betätigungselementes 18 für den Schwenkeinsatz 13, insbesondere die Kulissenführung 21 derart ausgebildet, daß das Betätigungselement 18 für den Schwenkeinsatz 13 beim Verschwenken des Schwenkeinsatzes 13 in die geöffnete Position derart nach vorne verschoben wird, daß das Betätigungselement 18 über den Rand der Instrumententafel 11 übersteht, siehe z.B. die Fig. 2 der Zeichnung.

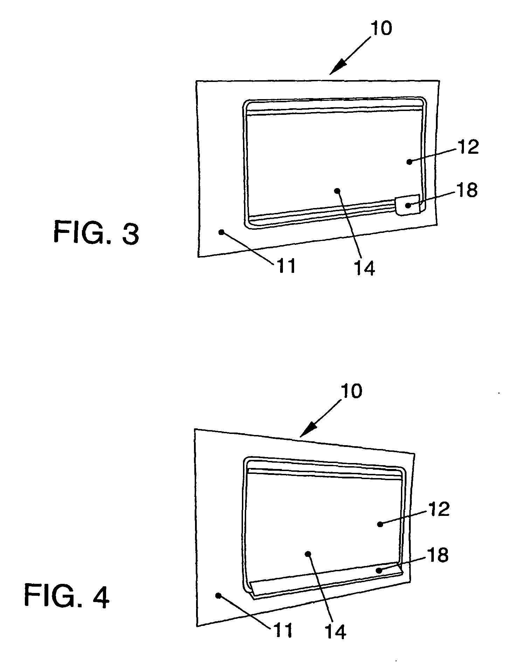

Bei dem in der Fig. 3 der Zeichnung dargestellten Ausführungsbeispiel erstreckt sich das Betätigungselement 18 für den Schwenkeinsatz 13 über wenigstens einen Teilbereich des Luftausströmers 12, d.h. in diesem Falle ist das Betätigungselement als bereichsweiser Griff ausgebildet. Bei dem in Fig. 4 dargestellten Ausführungsbeispiel erstreckt sich das Betätigungselement 18 für den Schwenkeinsatz 13 durchgehend über die gesamte Breite des Luftausströmers 12, dadurch wird die Handhabbarkeit erheblich verbessert. In beiden Fällen kann das Betätigungselement 18 für den Schwenkeinsatz 13 an dem Verschlußelement 14 des Schwenkeinsatzes 13 angeordnet sein.

Mit der erfindungsgemäßen Luftströmungsbeeinflussungseinrichtung 10 wird die Möglichkeit geschaffen, bei solchen Luftausströmern 12 mit Schwenkeinsatz 13 und damit zusammenwirkendem Verschlußelement 14 bei Beibehaltung einer vollen Dekorfähigkeit den Schwenkbereich des Luftausströmers 12 deutlich zu vergrößern und weiterhin durch eine Luftquerschnittsverbesserung eine Verbesserung der Funktionseigenschaften zu erzielen. So führen insb. nicht im Luftstrom liegende Betätigungselemente zu unnötigen Verwirbelungen.

Wie bereits erwähnt, sind die dargestellten Ausführungsformen nur beispielsweise Verwirklichungen der Erfindung, diese ist nicht darauf beschränkt, es sind vielmehr noch mancherlei Abänderungen und Ausbildungen möglich. So kann insbesondere der Luftausströmer 12 bzw. dessen Schwenkeinsatz 13 eine von den Figuren der Zeichnung abweichende Ausgestaltung aufweisen. Weiterhin denkbar sind Abwandlungen bei der Anordnung der horizontalen und vertikalen Luftleitelemente 15, 16 sowie der Ausbildung des Betätigungselements 19.

### BEZUGSZEICHENLISTE

- 9: Drehachse des Schwenkeinsatzes
- 10: Luftströmungsbeeinflussungseinrichtung
- 11: Instrumententafel
- 12: Luftausströmer
- 13: Schwenkeinrichtung
- 14: Verschlußelement (von 13)
- 15: Luftleitelement (horizontal verstellbar)
- 16: Luftleitelement (vertikal verstellbar)
- 17: Verschlußklappe (von 12)
- 18: Betätigungselement (für 13)
- 19: Betätigungselement (für 15, 16)
- 20: Mittel zur gekoppelten Bewegung (von 18)
- 21: Kulissenführung
- 22: Stift (an 18)
- 23: Gehäuse

## Patentansprüche

1. Luftströmungsbeeinflussungseinrichtung (10), insbesondere zur Verwendung in der Instrumententafel (11) von Fahrzeugen, mit einem Gehäuse (23) und einem Luftausströmer (12) mit Funktionselementen, wobei der Luftausströmer (12) wenigstens einen am Gehäuse (23) um eine Drehachse (9) schwenkbar gelagerten Schwenkeinsatz (13) mit wenigstens einem Verschlusselement (14) umfaßt, sowie im wesentlichen in horizontaler Richtung verstellbare Luftleitelemente (15) und/oder im wesentlichen in vertikaler Richtung verstellbare Luftleitelemente (16), und mit einer Luftzuführeinrichtung in Wirkverbindung steht, wobei der Luftausströmer (12) ein Betätigungselement (18) für den Schwenkeinsatz (13) und Betätigungselemente (19) für die Luftleitelemente (15,16) aufweist, **dadurch gekennzeichnet, daß** das Betätigungselement (18) für den Schwenkeinsatz (13) in einer am Schwenkeinsatz (13) angeordneten Linearführung (20) und in einer am Gehäuse (23) angeordneten kreisbogenförmigen Kulissenführung (21) derart gekoppelt geführt ist, dass bei einer Schwenkbewegung (A) um die Schwenkachse (9) das Betätigungselement (18) sich bezüglich des Schwenkeinsatzes (13) in linearer Bewegungsrichtung (B) verschiebt.

2. Luftströmungsbeeinflussungseinrichtung nach Anspruch 1, **dadurch gekennzeichnet, daß** die Linearführung (20) und die Kulissenführung (21) zur Führung des Betätigungselementes (18) für den Schwenkeinsatz (13) derart ausgebildet sind, daß in Einbaulage des Schwenkeinsatzes (13) das Betätigungselement (18) für den Schwenkeinsatz (13) beim Verschwenken des Schwenkeinsatzes (13) in die geöffnete Position nach vorne verschoben wird, derart, daß das Betätigungselement (18) nach vorne übersteht.

3. Luftströmungsbeeinflussungseinrichtung nach Anspruch 2, **dadurch gekennzeichnet, daß** die Linearführung (20) und die Kulissenführung (21) zur Führung des Betätigungselementes (18) für den Schwenkeinsatz (13) derart ausgebildet sind, daß in Einbaulage des Schwenkeinsatzes (13) das Betätigungselement (18) für den Schwenkeinsatz (13) beim Verschwenken des Schwenkeinsatzes (13) in die geöffnete Position derart nach vorne verschoben wird, daß das Betätigungselement (18) über den Rand der Instrumententafel (11) übersteht.

4. Luftströmungsbeeinflussungseinrichtung nach einem der Ansprüche 1 bis 3, **dadurch gekennzeichnet, daß** das Betätigungselement (18) für den Schwenkeinsatz (13) sich über einen Teilbereich des Luftausströmers (12) erstreckt.

5. Luftströmungsbeeinflussungseinrichtung nach einem der Ansprüche 1 bis 3, **dadurch gekennzeichnet, daß** das Betätigungselement (18) für den Schwenkeinsatz (13) sich durchgehend über im wesentlichen die gesamte Breite des Luftaustsrömers (12) erstreckt.

6. Luftströmungsbeeinflussungseinrichtung nach Anspruch 4 oder 5, **dadurch gekennzeichnet, daß** das Betätigungselement (18) für den Schwenkeinsatz (13) an dem Verschlußelement (14) des Schwenkeinsatzes (13) angeordnet ist.

7. Luftströmungsbeeinflussungseinrichtung nach einem der Ansprüche 1 bis 6, **dadurch gekennzeichnet, daß** der Luftausströmer (12) wenigstens eine mit einer Luftzuführeinrichtung in Wirkverbindung stehende Verschlußklappe (17) umfaßt.

## Claims

1. Device (10) for controlling an air flow, in particular for use in a vehicle dashboard (11), with a housing (23) and an air discharger (12) with functional elements, the air discharger (12) comprising at least one pivoting insert (13), which is mounted pivotably about an axis of rotation (9) on the housing (23) and has at least one closure element (14), and also comprising air-guiding elements (15) which can essentially be adjusted in the horizontal direction and/or air-guiding elements (16) which can essentially be adjusted in the vertical direction, and being operatively connected to an air supply device, the air discharger (12) having an actuating element (18) for the pivoting insert (13) and actuating elements (19) for the air-guiding elements (15, 16), **characterized in that** the actuating element (18) for the pivoting insert (13) is guided coupled in a linear guide (20) arranged on the pivoting insert (13) and in a circular arc-shaped slotted guide (21) arranged on the housing (23) such that, during a pivoting movement (A) about the pivot axis (9), the actuating element (18) is displaced in the linear direction of movement (B) with respect to the pivoting insert (13).

2. Device for controlling an air flow according to Claim 1, **characterized in that** the linear guide (20) and the slotted guide (21) for guiding the actuating element (18) for the pivoting insert (13) are designed in such a manner that, in the installed position of the pivoting insert (13), the actuating element (18) for the pivoting insert (13) is displaced forwards, when the pivoting insert (13) is pivoted into the opened position, such that the actuating element (18) projects forwards.

3. Device for controlling an air flow according to Claim 2, **characterized in that** the linear guide (20) and the slotted guide (21) for guiding the actuating element (18) for the pivoting insert (13) are designed in such a manner that, in the installed position of the pivoting insert (13), the actuating element (18) for the pivoting insert (13) is displaced forwards, when the pivoting insert (13) is pivoted into the opened position, such that the actuating element (18) projects over the edge of the dashboard (11).

4. Device for controlling an air flow according to one of Claims 1 to 3, **characterized in that** the actuating element (18) for the pivoting insert (13) extends over a subregion of the air discharger (12).

5. Device for controlling an air flow according to one of Claims 1 to 3, **characterized in that** the actuating element (18) for the pivoting insert (13) extends continuously over essentially the entire width of the air discharger (12).

6. Device for controlling an air flow according to Claim 4 or 5, **characterized in that** the actuating element (18) for the pivoting insert (13) is arranged on the closure element (14) of the pivoting insert (13).

7. Device for controlling an air flow according to one of Claims 1 to 6, **characterized in that** the air discharger (12) comprises at least one closure flap (17) operatively connected to an air supply device.

## Revendications

1. Dispositif de contrôle du flux d'air (10), notamment destiné à être utilisé dans le tableau de bord (11) des véhicules, comprenant un boîtier (23) et un diffuseur d'air (12) muni d'éléments fonctionnels, le diffuseur d'air (12) comprenant au moins un insert pivotant (13) monté sur le boîtier (23) de manière à pouvoir pivoter autour d'un axe de rotation (9) et muni d'au moins un élément de fermeture (14) ainsi que des éléments déflecteurs d'air (15) réglables pour l'essentiel dans le sens horizontal et/ou des éléments déflecteurs d'air (16) réglables pour l'essentiel dans le sens vertical, et étant en liaison active avec un dispositif d'arrivée d'air, le diffuseur d'air (12) présentant un élément de commande (18) pour l'insert pivotant (13) et des éléments de commande (19) pour les éléments déflecteurs d'air (15, 16), **caractérisé en ce que** l'élément de commande (18) pour l'insert pivotant (13) est guidé dans un guide linéaire (20) monté sur l'insert pivotant (13) et dans un guide coulissant (21) en forme d'arc de cercle monté sur le boîtier (23) en étant couplé de telle sorte que lors d'un mouvement de pivotement (A) autour de l'axe de pivotement (9), l'élément de commande (18) se décale dans le sens du déplacement linéaire (B) par rapport à l'insert pivotant (13).

2. Dispositif de contrôle du flux d'air selon la revendication 1, **caractérisé en ce que** le guide linéaire (20) et le guide coulissant (21) destinés à guider l'élément de commande (18) de l'insert pivotant (13) sont configurés de telle sorte que lorsque l'insert pivotant (13) est en position montée, l'élément de commande (18) de l'insert pivotant (13), lors du basculement de l'insert pivotant (13) en position ouverte, est décalé vers l'avant de telle sorte que l'élément de commande (18) fait saillie vers l'avant.

3. Dispositif de contrôle du flux d'air selon la revendication 2, **caractérisé en ce que** le guide linéaire (20) et le guide coulissant (21) destinés à guider l'élément de commande (18) de l'insert pivotant (13) sont configurés de telle sorte que lorsque l'insert pivotant (13) est en position montée, l'élément de commande (18) de l'insert pivotant (13), lors du basculement de l'insert pivotant (13) en position ouverte, est décalé vers l'avant de telle sorte que l'élément de commande (18) dépasse au-dessus du bord du tableau de bord (11).

4. Dispositif de contrôle du flux d'air selon l'une des revendications 1 à 3, **caractérisé en ce que** l'élément de commande (18) de l'insert pivotant (13) s'étend sur une zone partielle du diffuseur d'air (12).

5. Dispositif de contrôle du flux d'air selon l'une des revendications 1 à 3, **caractérisé en ce que** l'élément de commande (18) de l'insert pivotant (13) s'étend sans interruption sur essentiellement toute la largeur du diffuseur d'air (12).

6. Dispositif de contrôle du flux d'air selon la revendication 4 ou 5, **caractérisé en ce que** l'élément de commande (18) de l'insert pivotant (13) est monté sur l'élément de fermeture (14) de l'insert pivotant (13).

7. Dispositif de contrôle du flux d'air selon l'une des revendications 1 à 6, **caractérisé en ce que** le diffuseur d'air (12) comprend au moins un clapet de fermeture (17) qui se trouve en liaison active avec un dispositif d'arrivée d'air.
